# EUROPEAN PATENT APPLICATION

(11) **EP 1 178 482 A1**
(43) Date of publication of application: **06.02.2002**
(21) Application number: 00917287.5
(22) Date of filing: 12.04.2000
(51) Int. Cl.: G11B 20/10

(54) **OPTICAL DISC DIRECT COPIER**

(30) Priority: 14.04.1999 JP 10725099
(71) Applicant: Mitsumi Electric Co., Ltd., Chofu-shi, Tokyo 182-8557 (JP)
(72) Inventor: YASUMA, Toshihiko, Chofu-shi, Tokyo 182-8557 (JP)
(74) Representative: Moir, Michael Christopher
(86) International application number: JP0002372
(87) International publication number: WO0062294

(57) **Abstract**

An optical disc direct copier is for reading from a first optical disc (11) data written therein and writing the data read therefrom into a second optical disc (12). A pickup (21) reads the data from the first optical disc (11) to produce an RF signal. An RF amplifier (22) amplifies the RF signal. A binarizatlon circuit (23) binarizes an amplified signal. An EFM demodulation circuit (24) EFM demodulates a binarized signal. An error-code appending and error correction circuit (60) error-corrects an EFM-demodulated signal and appends an error code thereto. An EFM modulation circuit (31) EFM modulates an error-corrected and error-code appended signal. A strategy appending circuit (34) appends a strategy to an EFM-modulated signal. Responsive to a strategy-appended signal, a laser driver (35) produces a laser drive signal. Responsive to the laser drive signal, a pickup (36) writes data into the optical disc (12). The error-code appending and error correction circuit (60), the EFM demodulation circuit (24), the EFM modulation circuit (33), and the strategy appending circuit (34) may be omitted.

## Description

### Technical Field

This invention relates to an optical disc direct copier, for reading from a first optical disc data written therein and writing the data read therefrom into a second optical disc.

### Background Art

As is well known, various peripheral devices are connected to an electronic apparatus such as a personal computer. One of such devices is a memory device (recording medium). There are various kinds of memory devices (recording media), and one of such devices is a CD-R (compact disc recordable). The CD-R is a recording medium which is additionally recordable and is compatible with a CD-ROM or an audio CD (CD-DA). Writing into the CD-R requires a special equipment and an application program for writing. On the other hand, reading from the CD-R can be performed by the use of a typical CD-ROM drive. It is impossible to erase the data which have once been written, but additional recording can be carried out over and over.

In order to write information (data) to the above-mentioned CD-R or read the information (data) therefrom, a recording/reproducing optical pickup is required to irradiate a laser beam onto the CD-R.

Generally, the optical pickup of the type comprises a laser source for emitting a laser beam and an optical system for guiding the emitted laser beam to a recoding medium such as an optical disc. As described above, in the CD-R, it is possible to perform not only an information reading operation but also an information writing operation. However, in the optical pickup for the CD-R, it is necessary to change the power of the laser beam emitted from the laser source between the information reading operation and the information writing operation. This is because the information writing operation is performed by forming pits in a recording layer of the optical disc by irradiation of the laser beam. The power of the laser beam emitted from the laser source upon the Information writing operation is large in comparison with the power upon the information reading operation, for example, on the order of 10 to 20 times.

In order to read from a first optical disc such as a CD-ROM or an audio CD (CD-DA) data written therein and then write the data read therefrom to a second optical disc such as a CD-R, use is made of an optical disc direct copier.

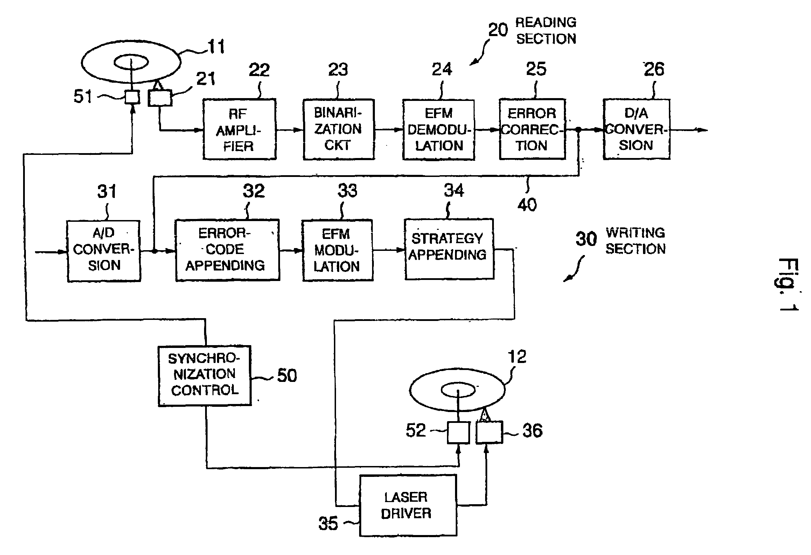

Referring to Fig. 1, description will be made about an existing optical disc direct copier. The existing optical disc direct copier comprises a reading section 20 for reading from a first optical disc 11 the data written therein and a writing section 30 for writing the data read by the reading section 20 into a second optical disc 12. The reading section 20 and the writing section 30 are respectively placed in separate housings (not shown) and connected through a cable 40.

The reading section 20 comprises a reading pickup 21 for reading the data from the first optical disc 11 to produce an RF signal, an RF amplifier 22 for amplifying the RF signal to produce an amplified signal, a binarization circuit 23 for binarizing the amplified signal to produce a binarized signal, an EFM demodulation circuit 24 for EFM (Eight to Fourteen Modulation) demodulating the binarized signal to produce an EFM-demodulated signal, an error correction circuit 25 for error-correcting the EFM-demodulated signal to produce an error-corrected signal, and a D/A conversion circuit 26 for digital-to-analog converting the error-corrected signal to produce an analog signal. The reading pickup 21 is referred to as a first pickup.

On the other hand, the writing section 30 comprises an A/D conversion circuit 31 for analog-to-digital converting the analog signal to produce a digital signal, an error-code appending circuit 32 for appending an error code to the digital signal or the error-corrected signal transmitted through the cable 40 to produce an error-code appended signal, an EFM demodulation circuit 33 for EFM modulating the error-code appended signal to produce an EFM-modulated signal, a strategy appending circuit 34 for appending a strategy to the EFM-modulated signal to produce a strategy-appended signal, a laser driver 35 for producing a laser drive signal in response to the strategy-appended signal, and a writing pickup 36 for writing data into the second optical disc 12 in response to the laser drive signal. The writing pickup 36 is referred to as a second pickup. It Is noted here that the "strategy" is to perform optimization for matching the two optical discs 11 and 12.

Furthermore, the optical disc direct copier comprises a synchronization control circuit 50 for establishing synchronization between the first optical disc 11 and the second optical disc 12. The synchronization control circuit 50 controls first and second spindle motors 51 and 52 for rotatably driving the first and the second optical discs 11 and 12, respectively.

However, in the above-mentioned existing optical disc direct copier, the reading section 20 and the writing section 30 are separately required, resulting in a problem that the number of circuit parts increases.

Therefore, it is an object of the present invention to provide an optical disc direct copier capable of reducing the number of parts.

### Disclosure of the Invention

An optical disc direct copier to which the present invention is applicable is an apparatus for reading from a first optical disc data written therein and writing the data read therefrom into a second optical disc.

According to a first aspect of the present invention, there is provided an optical disc direct copier comprising a first pickup for reading data from the first optical disc to produce an RF signal, an RF amplifier for amplifying the RF signal to produce an amplified signal, a binarization circuit for binarizing the amplified signal to produce a binarized signal, an EFM demodulation circuit for EFM (Eight to Fourteen Modulation) demodulating the binarized signal to produce an EFM-demodulated signal, an error-code appending and error correction circuit for error-correcting the EFM-demodulated signal and appending an error code thereto to produce an error-corrected and error-code appended signal, an EFM demodulation circuit for EFM modulating the error-corrected and error-code appended signal to produce an EFM-modulated signal, a strategy appending circuit for appending a strategy to the EFM-modulated signal to produce a strategy-appended signal, a laser driver for producing a laser drive signal In response to the strategy-appended signal, and a second pickup for writing data into the second optical disc in response to the laser drive signal.

According to a second aspect of the present Invention, there is provided an optical disc direct copier comprising a first pickup for reading data from the first optical disc to produce an RF signal, an RF amplifier for amplifying the RF signal to produce an amplified signal, a binarization circuit for binarizing the amplified signal to produce a binarized signal, an EFM demodulation circuit for EFM (Eight to Fourteen Modulation) demodulating the binarized signal to produce an EFM-demodulated signal, an EFM demodulation circuit for EFM modulating the EFM-demodulated signal to produce an EFM-modulated signal, a strategy appending circuit for appending a strategy to the EFM-modulated signal to produce a strategy-appended signal, a laser driver for producing a laser drive signal in response to the strategy-appended signal, and a second pickup for writing data into the second optical disc in response to the laser drive signal.

According to a third aspect of the present invention, there is provided an optical disc direct copier comprising a first pickup for reading data from the first optical disc to produce an RF signal, an RF amplifier for amplifying the RF signal to produce an amplified signal, a binarization circuit for binarizing the amplified signal to produce a binarized signal, an EFM demodulation circuit for EFM (Eight to Fourteen Modulation) demodulating the binarized signal to produce an EFM-demodulated signal, an EFM demodulation circuit for EFM modulating the EFM-demodulated signal to produce an EFM-modulated signal, a laser driver for producing a laser drive signal in response to the EFM-modulated signal, and a second pickup for writing data into the second optical disc in response to the laser drive signal.

According to a fourth aspect of the present invention, there is provided an optical disc direct copier comprising a first pickup for reading data from the first optical disc to produce an RF signal, an RF amplifier for amplifying the RF signal to produce an amplified signal, a binarization circuit for binarizing the amplified signal to produce a binarized signal, a strategy appending circuit for appending a strategy to the binarized signal to produce a strategy-appended signal, a laser driver for producing a laser drive signal In response to the strategy-appended signal, and a second pickup for writing data into the second optical disc in response to the laser drive signal.

According to a fifth aspect of the present invention, there is provided an optical disc direct copier comprising a first pickup for reading data from the first optical disc to produce an RF signal, an RF amplifier for amplifying the RF signal to produce an amplified signal, a binarization circuit for binarizing the amplified signal to produce a binarized signal, a laser driver for producing a laser drive signal in response to the binarized signal, and a second pickup for writing data into the second optical disc in response to the laser drive signal.

### Brief Description of the Drawing

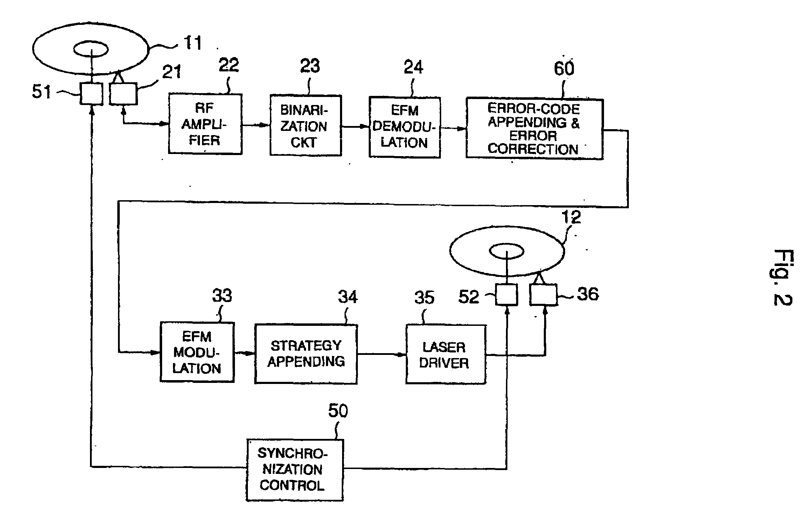

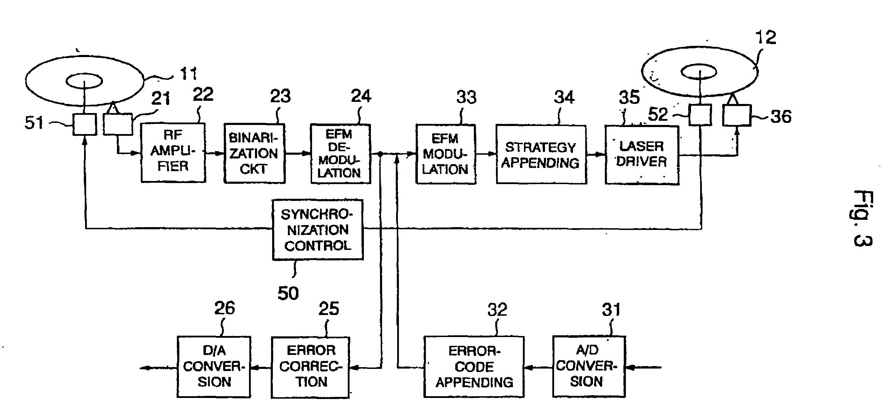

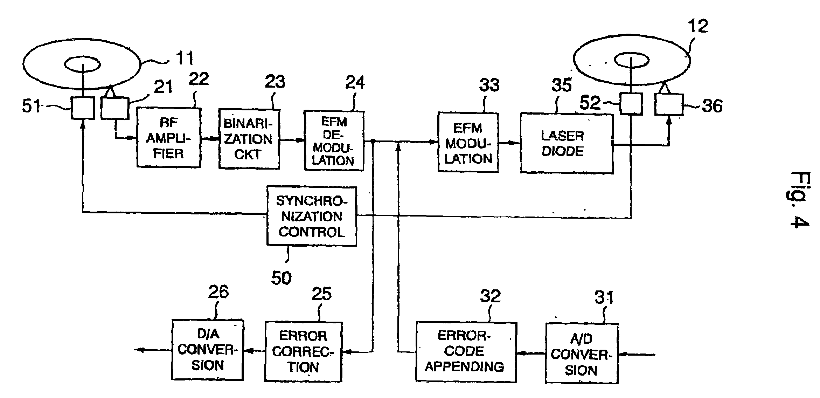

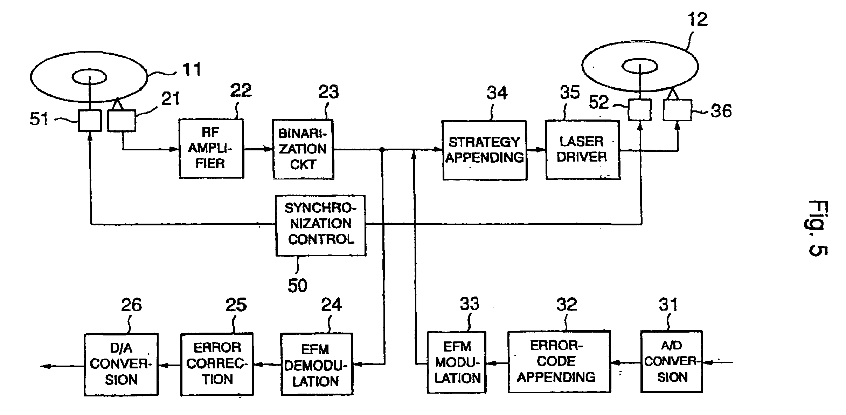

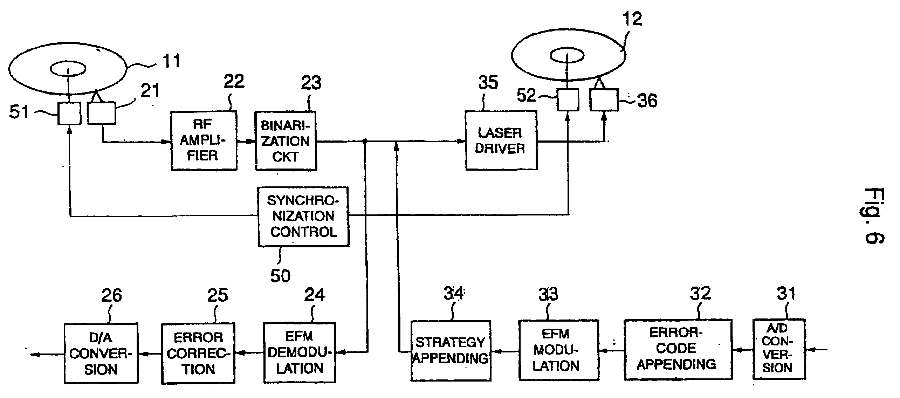

Fig. 1 is a block diagram showing a structure of an existing optical disc direct copier, Fig. 2, a block diagram showing a structure of an optical disc direct copier according to a first embodiment of the present invention, Fig. 3, a block diagram showing a structure of an optical disc direct copier according to a second embodiment of the present invention, Fig. 4, a block diagram showing a structure of an optical disc direct copier according to a third embodiment of the present invention, Fig. 5, a block diagram showing a structure of an optical disc direct copier according to a fourth embodiment of the present invention, and Fig. 6, a block diagram showing a structure of an optical disc direct copier according to a fifth embodiment of the present invention.

### Best Mode for Embodying the Invention

In order to explain the present invention more in detail, description will be made with reference to the drawings attached hereto.

Referring to Fig. 2, description will be made about an optical disc direct copier according to a first embodiment of the present invention.

The illustrated optical disc direct copier comprises a structure similar to that shown in Fig. 1 except that the error correction circuit 25 and the error-code appending circuit 32 are replaced by an error-code appending and error correction circuit 60. Therefore, components similar In functions to those shown in Fig. 1 are designated by the same reference numerals and explanation thereof is omitted in order to simplify the description.

The error-code appending and error correction circuit 60 is Inserted between the EFM demodulation circuit 24 and the EFM modulation circuit 33. The error-code appending and error correction circuit 60 is supplied from the EFM demodulation circuit with an EFM-demodulated signal and error-corrects the EFM-demodulated signal and appends an error code thereto to produce an error-corrected and error-code appended signal. This error-corrected and error-code appended signal is supplied to the EFM demodulation circuit 33. The EFM demodulation circuit 33 is supplied with the error-corrected and error-code appended signal from the error-code appending and error correction circuit 60 and EFM modulates the error-corrected and error-code appended signal to produce an EFM-modulated signal.

As described above, in the above-mentioned first embodiment, two parts including the error correction circuit 25 and the error-code appending circuit 32 are replaced by one part, i.e., the error-code appending and error correction circuit 60. This provides an advantage that the circuit structure Is simplified In comparison with the existing one.

As will hereinafter be described, the circuit structure can be simplified further although the performance (accuracy) might be inferior to the above-mentioned first embodiment.

Referring to Fig. 3, description will be made about an optical disc direct copier according to a second embodiment of the present Invention.

The optical disc direct copier according to the second embodiment comprises a structure in which the EFM demodulation circuit 24 and the EFM modulation circuit 33 are directly connected to each other. In other words, the error-code appending and error correction circuit 60, which is required in the first embodiment, is removed.

Specifically, the EFM-demodulated signal produced from the EFM demodulation circuit 24 is directly supplied to the EFM modulation circuit 33. The EFM modulation circuit 33 EFM modulates the EFM-demodulated signal to produce the EFM-modulated signal.

With the above-mentioned structure, the circuit structure can be further simplified as compared with that of the first embodiment although the accuracy would be slightly inferior to that of the first embodiment.

In the example shown in Fig. 3, an error correction circuit 25 and a D/A conversion circuit 26 are connected downstream to the EFM demodulation circuit 24. With this structure, it is possible to output the data recorded in the first optical disc 11 (to listen to music in case where the first optical disc 11 is an audio CD) while copying. In addition, an error-code appending circuit 32 and an A/D conversion circuit 31 are connected upstream to the EFM demodulation circuit 33. With this structure, it is possible not only to copy but also to write ordinary data into the second optical disc 12.

Next, referring to Fig. 4, description will be made about an optical disc direct copier according to a third embodiment of the present invention.

The optical disc direct copier according to the third embodiment comprises a structure similar to that shown In Fig. 3 except that a strategy appending circuit 34 is omitted. Specifically, the EFM modulation circuit 33 is connected directly to a laser diode 35. Consequently, the EFM-modulated signal produced from the EFM modulation circuit 33 is directly supplied to the laser diode 35. In response to the EFM-modulated signal, the laser diode 35 produces a laser drive signal.

With the above-mentioned structure, the circuit structure can be further simplified as compared with that of the second embodiment although the accuracy would be slightly inferior to that of the second embodiment.

Referring to Fig. 5, description will be made about an optical disc direct copier according to a fourth embodiment of the present invention.

The optical disc direct copier according to the fourth embodiment comprises a structure in which a binarization circuit 23 and the strategy appending circuit 34 are directly connected to each other.

Specifically, a binarized signal produced from the binarization circuit 23 is directly supplied to the strategy appending circuit 34. The strategy appending circuit 34 appends a strategy to the binarized signal to produce a strategy-appended signal.

With the above-mentioned structure, the circuit structure can be further simplified as compared with that of the third embodiment although the accuracy would be slightly inferior to that of the third embodiment.

In the example shown in Fig. 5, the EFM demodulation circuit 24, the error correction circuit 25, and the D/A conversion circuit 26 are connected downstream to the binarization circuit 23. With this structure, it is possible to output the data recorded in the first optical disc 11 (to listen to music in case where the first optical disc 11 is an audio CD) while copying. In addition, the EFM demodulation circuit 33, the error-code appending circuit 32, and the A/D conversion circuit 31 are connected upstream to the strategy appending circuit 34. With this structure, it Is possible not only to copy but also to write ordinary data into the second optical disc 12.

Referring to Fig. 6, description will be made about an optical disc direct copier according to a fifth embodiment of the present invention.

The optical disc direct copier according to the fifth embodiment comprises a structure in which the binarization circuit 23 and the laser driver 35 are connected directly to each other.

Specifically, the binarized signal produced from the binarization circuit 23 is directly supplied to the laser driver 35. The laser driver 35 produces a laser drive signal in response to the binarized signal.

With the above-mentioned structure, the circuit structure can be further simplified as compared with that of the fourth embodiment although the accuracy would be slightly inferior to that of the fourth embodiment.

In the example shown In Fig. 6, the EFM demodulation circuit 24, the error correction circuit 25 and the D/A conversion circuit 26 are connected downstream to the binarization circuit 23, in the manner similar to that illustrated in Fig. 5. With this structure, it is possible to output the data recorded in the first optical disc 11 (to listen to music in case where the first optical disc 11 is an audio CD) while copying. In addition, the strategy appending circuit 34, the EFM demodulation circuit 33, the error-code appending circuit 32, and the A/D conversion circuit 31 are connected upstream to the laser driver 35. With this structure, it is possible not only to copy but also to write ordinary data into the second optical disc 12.

It will readily be understood that the present invention is not limited to the above-mentioned embodiments but may be modified in various manners within the scope not departing from the gist of the present invention.

As described so far, in the present Invention, the circuit structure can be simplified because parts of the reading section and the writing section can be omitted although those parts have traditionally been required.

## Claims

1. An optical disc direct copier for reading from a first optical disc (11) data written therein and writing the data read therefrom Into a second optical disc (12), wherein the optical disc direct copier comprises:
a first pickup (21) for reading the data from said first optical disc to produce an RF signal,
an RF amplifier (22) for amplifying said RF signal to produce an amplified signal,
a binarization circuit (23) for binarizing said amplified signal to produce a binarized signal,
an EFM demodulation circuit (24) for EFM (Eight to Fourteen Modulation) demodulating said binarized signal to produce an EFM-demodulated signal,
an error-code appending and error correction circuit (60) for error-correcting said EFM-demodulated signal and appending an error code thereto to produce an error-corrected and error-code appended signal,
an EFM demodulation circuit (33) for EFM modulating said error-corrected and error-code appended signal to produce an EFM-modulated signal,
a strategy appending circuit (34) for appending a strategy to said EFM-modulated signal to produce a strategy-appended signal,
a laser driver (35) for producing a laser drive signal in response to said strategy-appended signal, and
a second pickup (35) for writing data into said second optical disc in response to said laser drive signal.

2. An optical disc direct copier for reading from a first optical disc (11) data written therein and writing the data read therefrom into a second optical disc (12), wherein the optical disc direct copier comprises:
a first pickup (21) for reading the data from said first optical disc to produce an RF signal,
an RF amplifier (22) for amplifying said RF signal to produce an amplified signal,
a binarization circuit (23) for binarizing said amplified signal to produce a binarized signal,
an EFM demodulation circuit (24) for EFM (Eight to Fourteen Modulation) demodulating said binarized signal to produce an EFM-demodulated signal,
an EFM demodulation circuit (33) for EFM modulating said EFM-demodulated signal to produce an EFM-modulated signal,
a strategy appending circuit (34) for appending a strategy to said EFM-modulated signal to produce a strategy-appended signal,
a laser driver (35) for producing a laser drive signal in response to said strategy-appended signal, and
a second pickup (36) for writing data into said second optical disc in response to said laser drive signal.

3. An optical disc direct copier for reading from a first optical disc (11) data written therein and writing the data read therefrom into a second optical disc (12), wherein the optical disc direct copier comprises:
a first pickup (21) for reading the data from said first optical disc to produce an RF signal,
an RF amplifier (22) for amplifying said RF signal to produce an amplified signal,
a binarization circuit (23) for binarizing said amplified signal to produce a binarized signal,
an EFM demodulation circuit (24) for EFM (Eight to Fourteen Modulation) demodulating said binarized signal to produce an EFM-demodulated signal,
an EFM demodulation circuit (33) for EFM modulating said EFM-demodulated signal to produce an EFM-modulated signal,
a laser driver (35) for producing a laser drive signal in response to said EFM-modulated signal, and
a second pickup (36) for writing data into said second optical disc in response to said laser drive signal.

4. An optical disc direct copier for reading from a first optical disc (11) data written therein and writing the data read therefrom Into a second optical disc (12), wherein the optical disc direct copier comprises:
a first pickup (21) for reading the data from said first optical disc to produce an RF signal,
an RF amplifier (22) for amplifying said RF signal to produce an amplified signal,
a binarization circuit (23) for binarizing said amplified signal to produce a binarized signal,
a strategy appending circuit (34) for appending a strategy to said binarized signal to produce a strategy-appended signal,
a laser driver (35) for producing a laser drive signal in response to said strategy-appended signal, and
a second pickup (36) for writing data into said second optical disc in response to said laser drive signal.

5. An optical disc direct copier for reading from a first optical disc (11) data written therein and writing the data read therefrom Into a second optical disc (12), wherein the optical disc direct copier comprises:
a first pickup (21) for reading the data from said first optical disc to produce an RF signal,
an RF amplifier (22) for amplifying said RF signal to produce an amplified signal,
a binarization circuit (23) for binarizing said amplified signal to produce a binarized signal,
a laser driver (35) for producing a laser drive signal in response to said binarized signal, and
a second pickup (36) for writing data into said second optical disc in response to said laser drive signal.
